# EUROPEAN PATENT SPECIFICATION

(11) **EP 3 419 381 B1**
(45) Date of publication and mention of the grant of the patent: **30.07.2025**
(21) Application number: 18179102.1
(22) Date of filing: 21.06.2018
(51) Int. Cl.: H05B 3/28, H05B 3/36, H05B 3/14, B64D 15/12

(54) **ELECTROTHERMAL ICE PROTECTION SYSTEMS WITH CARBON ADDITIVE LOADED THERMOPLASTIC HEATING ELEMENTS**
ELEKTROTHERMISCHE EISSCHUTZSYSTEME MIT KOHLENSTOFFADDITIVBELADENEN THERMOPLASTISCHEN HEIZELEMENTEN
SYSTÈMES ÉLECTROTHERMIQUES DE PROTECTION CONTRE LA GLACE COMPORTANT DES ÉLÉMENTS CHAUFFANTS THERMOPLASTIQUES CHARGÉS D'ADDITIFS DE CARBONE

(30) Priority: 22.06.2017 US 201715630250
(43) Date of publication of application: 26.12.2018
(73) Proprietor: Goodrich Corporation, Charlotte, NC 28217-4578 (US)
(72) Inventor: HU, Jin, Hudson, OH 44236 (US); BOTURA, Galdemir Cezar, Akron, OH 44313 (US); SLANE, Casey, Richwood, OH 43344 (US)
(74) Representative: Dehns

(56) References cited:
- EP-A1- 3 098 167
- EP-A1- 3 569 506
- WO-A1-2016/126827
- WO-A2-2008/048705
- WO-A2-2010/129234
- WO-A2-2012/092623
- WO-A2-2012/159608

## Description

### BACKGROUND

An aircraft moving through the air is often subjected to ice formation, and anti-icing or de-icing devices must be used to remove or prevent ice from accumulating on exterior surfaces of the aircraft. Various types of ice protection systems have been developed to protect aircraft from the hazardous effects of icing. Electro-thermal de-icing systems typically use metal resistor heaters to melt ice by converting electrical energy to thermal energy.

Carbon nanotube (CNT) materials have been proposed as an alternative to metal wire or foil heating elements in ice protection systems. CNTs are carbon allotropes having a generally cylindrical nanostructure. They have unusual properties that make them valuable for many different technologies. For instance, some CNTs heating elements can have high thermal and electrical conductivity, making them suitable for replacing metal heating elements. Due to their much lighter mass, substituting CNTs for metal heating components can reduce the overall weight of a heating component significantly. Furthermore CNT heaters have low thermal mass, therefore it has a potential to heat up and cool fast and save peak power. These make the use of CNTs of particular interest for aerospace electrothermal de-icing applications.

However, carbon-based fabric heating elements for ice protection are subject to carbon debris migration across the heating element during heater fabrication. The resulting heater may have electric short or liable to dielectric breakdown due to the CNT particles migration. Each of WO 2016/126827 A1, WO 2010/129234 A2, EP 3 098 167 A1, WO 2012/092623 A2 and WO 2012/159608 A2 discloses a known electric heater for an aircraft.

### SUMMARY

According to a first aspect, there is provided an ice protection system according to claim 1.

According to a second aspect, there is provided a method according to claim 8.

### BRIEF DESCRIPTION OF THE DRAWINGS

FIG. 1 is a schematic view of a carbon additive loaded electrothermal ice protection heating element.
FIG. 2 is a schematic diagram of an ice protection system with a carbon additive loaded electrothermal ice protection heating element.
FIG. 3 is a flow chart depicting a method of making a carbon additive loaded electrothermal ice protection system.

### DETAILED DESCRIPTION

Carbon-based fabric heating elements for ice protection can contain carbon nanotubes, graphite fibers, graphite nanofibers or graphene. These fabrics can be prepared as pre-impregnated fabrics with thermosetting polymers such as epoxy resins. Alternatively, these fabrics can be coupled with thermosetting film adhesives to allow multiple plies or attachments to metal skins. These CNT fabric heating elements can form de-icer or anti-icer assemblies. In a given carbon-fiber based composite layer heating element, carbon debris have a tendency to migrate between plies, for instance between layers of a heating element and airfoil skins or between heating elements, causing electric shorting. They are additionally liable to dielectric breakdown. If these carbon based fabrics are pre-cured as a pre-impregnated layer before being cured with other plies and layer, the CNT heating element usually has a lack of conformability for de-icing surfaces. Additionally, carbon-based fabrics cannot be tailored to specific resistivity once cured.

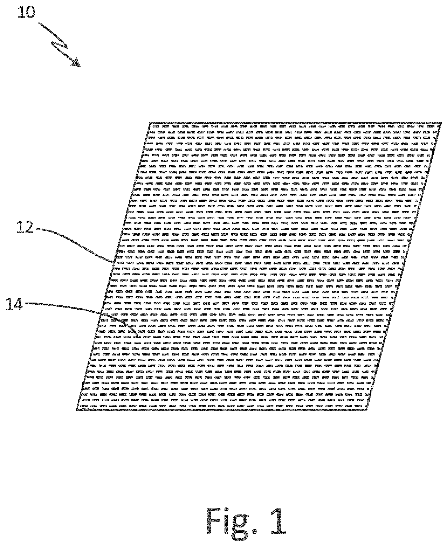

The present disclosure concerns the use of thermally stable thermoplastic sheets containing carbon allotropes for heating elements. This construction of the sheet prevents migration of carbon debris across layers within the structure of a composite ice protection system. FIG. 1 is a schematic view of a carbon additive loaded electrothermal ice protection heating element. Heating element 10 includes thermoplastic 12 and carbon additives 14.

Thermoplastic 12 is a thermally stable plastic, such as a polyetherether ketone (PEEK), polyetherimide (PEI), polyethlylene (PE), polyether sulfone (PES), polylactic acid (PLA), Nylon ^{®}, polyethylene-naphthalate (PEN), polybenzimidazole (PBI), polyimide (PI), poly methyl methacrylate (PMMA), or combinations thereof. Thermoplastic 12 should be thermally stable.

Carbon additives 14 can be carbon nanotubes, graphene, carbon nanofibers, graphite powder, graphene nanoribbons, or other appropriate electrically conductive material for carbon-based heating elements. Carbon additives 14 can be loose particles added to thermoplastic 12, or can be a carbon fabric to which thermoplastic 12 is applied.

Resulting heating element 10 is used for ice protection. Due to its thermoplastic nature, heating element 10 can be applied to surfaces with varying shapes, such as airfoils, nacelle components, and other areas of an aircraft needing ice protection. Heating element 10, when used as a ply in a composite heating element, or combined with multiple carbon-based heating element layers, limits carbon debris migration. The amount of carbon additives added into heating element 10, and the amount of CNT heating elements in an assembly, can be readily varied to change resistivity or sheet resistivity. Thermoplastic 12 holds carbon additives 14 in place, whether carbon additives 14 are woven, unwoven or randomly distributed. The resulting heating element can have electrical sheet resistivity between 0.005 ohms per square (Ω/sq) and 10 ohms per square (Ω/sq), preferably between 0.02 ohms per square (Ω/sq) and 3.0 Ω/sq.

Finally, handling of heating element 10 is airborne safer for an end user applying heating element 10 to an ice protection purpose. A person who is applied heating element 10 to a surface is not working directly with carbon nanotubes, carbon fibers, or other carbon additives as he would be with carbon fabrics used in previous heating systems. Instead, a handler is working with a thermoplastic sheet or strip. Thus, handling of heating element 10 is safer.

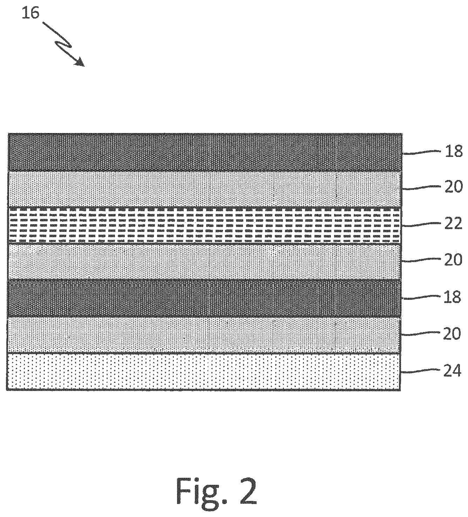

FIG. 2 is a schematic diagram of ice protection system 16 with a carbon additive loaded electrothermal ice protection heating element. System 16 includes fiberglass layers 18, film adhesive layers 20, carbon additive loaded electrothermal ice protection heating element 22, and skin layer 24. Heating element 22 is similar to heating element 10 of FIG. 1 in its composition. Heating element 22 is supported by fiberglass layers 18, and skin layer 24, which are adhered to heating element 22 by film adhesive layer 20. Skin layer 24 can be a metallic skin or a composite (such as a fiberglass or carbon fiber composite) suitable for ice protection.

Heating element 22 is a thermoplastic carbon heater and is being used in system 16 as the substructure of an airfoil. The coefficient of thermal expansion (CTE) of heating element 22 is compatible with other layers 18 and 24 to prevent delamination under thermal cycles, particularly between -55 and 85 degrees Celsius. Additionally, system 16 has a shear strength of at least 1500 PSI and sufficient bird and hail strike resistance.

The embodiment in FIG. 2 is representative of an ice protection assembly scheme. In other embodiment, fiberglass 18 can be replaced with, for example, dielectric films or other pre-impregnated materials. Additionally, the number of fiberglass layers 18 can be increased or decreased based on ice protection needs. In some embodiments, film adhesive layers 20 are not needed because pre-impregnated layers are sufficiently adhesive or if the ice protection application requires less stringent bonding requirements. Thus, ice protection system 16 can be altered depending on ice protection needs.

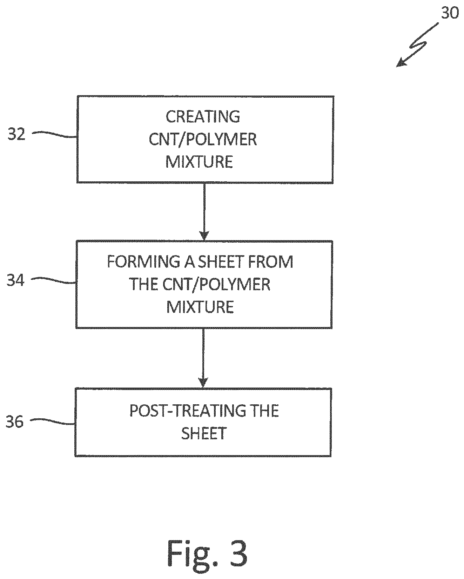

FIG. 3 is a flow chart depicting method 30 of making a carbon additive loaded electrothermal ice protection heating element. In method 30, a carbon-polymer mixture is made in step 32, a carbon-polymer sheet is formed in step 34, and the sheet is post-treated in step 36.

First, in step 32, a carbon-polymer mixture is made. The mixture contains a polymer, such as a polyetherether ketone (PEEK), polyetherimide (PEI), polyethlylene (PE), polyether sulfone (PES), polylactic acid (PLA), Nylon ^{®}, polyethylene-naphthalate (PEN), polybenzimidazole (PBI), polyimide (PI), poly methyl methacrylate (PMMA), or combinations thereof.

A carbon additive is integrated into the polymer by standard methods, such as by dissolving a base polymer resin and mixing in a carbon allotrope. Alternatively, a traditional plastic compounding process such as extrusion or internal mixing can be used. Appropriate carbon additives include, for example, carbon nanotubes, graphene, carbon nanofibers, graphite powder, graphene nanoribbons, or other appropriate electrically conductive material for carbon-based heating elements.

In step 34, a sheet is formed from the carbon-polymer mixture. If a method such as dissolution of a base polymer and mixing with a carbon allotrope is used, the mixture can be formed into a sheet and remaining solvent can be removed. If traditional plastic compounding processes are used, then a sheet can be created from a cast or blown extrusion film process. Alternatively, the polymer can be applied to a woven or non-woven carbon fiber sheet. Additionally, heating element 10 can be created as a three dimensional shape instead of a sheet by molding, allowing tailoring to large ranges of electrical resistivity.

In step 36, the sheet can be tailored in post-treatment processes as desired. The resulting carbon additive filled polymer can have a thickness of between 0.001 inches and about 0.010inches, depending on a surface to which it will be applied for ice protection.

The resulting carbon additive filled polymer sheet is lightweight, electrically conductive, and does not cause carbon fiber migration problems when used in composite layers and its resistivity can be readily tailored by carbon additive loading.

### Discussion of Possible Embodiments

The following are non-exclusive descriptions of possible embodiments of the present invention.

An electrothermal ice protection article includes a thermally stable thermoplastic sheet containing a carbon allotrope additive.

The article of the preceding paragraph can optionally include, additionally and/or alternatively, any one or more of the following features, configurations and/or additional components:

The thermally stable thermoplastic sheet is made of a material selected from the group consisting of polyetherether ketones, polyetherimides, polyethlylenes, polyether sulfones, polylactic acid, nylon, polyethylene-naphthalates, polybenzimidazole, polyimides, poly methyl methacrylates and combinations thereof.

The carbon allotrope additive is selected from the group consisting of carbon nanotubes, graphene, carbon nanofibers, graphite powder, and graphene nanoribbons.

The article has a uniform thickness between 0.0005 inches (0.01 mm) and about 0.010 inches (0.25 mm).

The article has a uniform thickness between 0.001 inches (0.002 mm) and 0.003 inches (0.06 mm).

The article has a varying thickness.

The article has an electrical sheet resistivity between 0.005 ohms per square and 10.0 ohms per square.

The article has an electrical sheet resistivity between 0.02 ohms per square and 3.0 ohms per square.

The article has a first electrical resistivity in a first portion of the article, and a second electrical resistivity in a second portion of the articles; and wherein the first resistivity and the second resistivity differ.

A method of making an electrothermal ice protection system includes creating a polymer and carbon additive mixture, forming a sheet from the polymer and carbon additive mixture, and post-treating the polymer and carbon additive mixture.

The method of the preceding paragraph can optionally include, additionally and/or alternatively, any one or more of the following features, configurations and/or additional components:
Creating a polymer and carbon additive mixture comprises dissolving a base polymer resin and mixing the carbon additive into the base polymer resin.

Creating a polymer and carbon additive mixture comprises mixing a polymer resin and the carbon additive in a plastic compounding process.

The plastic compounding process comprises heating the polymer resin to allow incorporation of the carbon additive to create a film.

Forming a thermoplastic sheet from the polymer and carbon additive mixture is done by placing the film into a cast to form a sheet.

The thermoplastic sheet is made of a material selected from the group consisting of polyetherether ketones, polyetherimides, polyethlylenes, polyether sulfones, polylactic acid, nylon, polyethylene-naphthalates, polybenzimidazole, polyimides, poly methyl methacrylates and combinations thereof.

The carbon allotrope additive is selected from the group consisting of carbon nanotubes, graphene, carbon nanofibers, graphite powder, and graphene nanoribbons.

Forming a sheet comprises molding the mixture into a complex shape.

Forming a mixture comprises injection the polymer with the carbon additive.

An ice protection system includes a carbon heating element comprising a thermally stable thermoplastic sheet containing a carbon allotrope additive, a first fiberglass layer adhered to the carbon heating element by a film adhesive, a second fiberglass layer adhered to the carbon heating element opposite the first fiberglass layer by a film adhesive, and a skin layer adhered to the second fiberglass layer opposite the carbon heating element by a film adhesive.

The system of the preceding paragraph can optionally include, additionally and/or alternatively, any one or more of the following features, configurations and/or additional components:

The skin layer comprises a metallic layer or a composite layer.

While the invention has been described with reference to an exemplary embodiment(s), it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

## Claims

1. An ice protection system (16) comprises:
a first layer (18) comprising fiberglass, a dielectric film or a pre-impregnated material;
an electrothermal ice protection heating element (22) comprising a thermoplastic sheet (12) containing a carbon allotrope additive (14);
a second layer (18) comprising fiberglass, a dielectric film or a pre-impregnated material; and
a skin layer (24) comprising a metallic material or fiberglass, wherein the ice protection system optionally comprises an adhesive layer (20) positioned between one or more of the first layer (18) and the electrothermal ice protection heating element (22), the electrothermal ice protection heating element (22) and the second layer (18) and the second layer (18) and the skin layer (24);
wherein the first layer, the second layer and the skin layer provide support to the electrothermal ice protection heating element;
wherein the electrothermal ice protection heating element is disposed between the first layer and the second layer;
wherein the ice protection system (16) has a shear strength of at least 10,342 kilopascals (1500 pounds per square inch); and
wherein the electrothermal ice protection heating element (22) has a uniform thickness between 10 micrometers (0.0005 inches) and 0.25 mm (0.010 inches).

2. The system of claim 1, wherein the thermoplastic sheet (12) is made of a material selected from the group consisting of polyetherether ketones, polyetherimides, polyethlylenes, polyether sulfones, polylactic acid, nylon, polyethylene-naphthalates, polybenzimidazole, polyimides, poly methyl methacrylates and combinations thereof.

3. The system of claim 1 or 2, wherein the carbon allotrope additive (14) is selected from the group consisting of carbon nanotubes, graphene, carbon nanofibers, graphite powder, and graphene nanoribbons.

4. The system of claim 1, 2 or 3, wherein the article has a uniform thickness between 0.02 mm (0.001 inches) and 0.06 mm (0.003 inches).

5. The system of claim 1, 2 or 3, wherein the electrothermal ice protection heating element (22) has a varying thickness.

6. The system of any preceding claim, wherein the electrothermal ice protection heating element (22) has an electrical sheet resistivity between 0.005 ohms per square and 10.0 ohms per square, and preferably
wherein the electrothermal ice protection heating element (22) has an electrical sheet resistivity between 0.02 ohms per square and 3.0 ohms per square.

7. The system of any preceding claim, wherein the electrothermal ice protection heating element (22) has a first electrical resistivity in a first portion of the electrothermal ice protection heating element (22), and a second electrical resistivity in a second portion of the electrothermal ice protection heating element (22); and wherein the first resistivity and the second resistivity differ.

8. A method (30) of making an electrothermal ice protection system (16) comprising:
making an electrothermal ice protection heating element (22) by:
creating (32) a polymer and carbon additive mixture;
forming (34) a thermoplastic sheet from the polymer and carbon additive mixture; and
post-treating (36) the polymer and carbon additive mixture; and
wherein the electrothermal ice protection heating element (22) has a uniform thickness between 10 micrometers (0.0005 inches) and 0.25mm (0.010 inches),
mounting the electrothermal ice protection heating element (22) on a second layer (18) comprising fiberglass, a dielectric film or a pre-impregnated material;
mounting a first layer (18) comprising fiberglass, a dielectric film or an pre-impregnated material on the electrothermal ice protection heating element (22), and
optionally applying an adhesive layer (20) between one or more of the first layer (18) and the electrothermal ice protection heating element (22), the electrothermal ice protection heating element (22) and the second layer, and the second layer (18) and the skin layer (24);
wherein the first layer, the second layer and the skin layer provide support to the electrothermal ice protection heating element;
wherein the electrothermal ice protection heating element is disposed between the first layer and the second layer; and
wherein the ice protection system (16) has a shear strength of at least 10,342 kilopascals (1500 pounds per square inch).

9. The method of claim 8, wherein creating a polymer and carbon additive mixture comprises dissolving a base polymer resin and mixing the carbon additive into the base polymer resin.

10. The method of claim 8, wherein creating (32) a polymer and carbon additive mixture comprises mixing a polymer resin and the carbon additive in a plastic compounding process, and preferably
wherein the plastic compounding process comprises heating the polymer resin to allow incorporation of the carbon additive to create a film, and preferably
wherein forming (34) a thermoplastic sheet from the polymer and carbon additive mixture is done by placing the film into a cast to form a sheet.

11. The method of claim 8, 9 or 10, wherein the thermoplastic sheet (12) is made of a material selected from the group consisting of polyetherether ketones, polyetherimides, polyethlylenes, polyether sulfones, polylactic acid, nylon, polyethylene-naphthalates, polybenzimidazole, polyimides, poly methyl methacrylates and combinations thereof, and/or
wherein the carbon allotrope additive (14) is selected from the group consisting of carbon nanotubes, graphene, carbon nanofibers, graphite powder, and graphene nanoribbons.

12. The method of any of claims 8 to 11, wherein forming (34) a sheet (12) comprises molding the mixture into a complex shape.

13. The method of any of claims 8 to 12, wherein forming a mixture comprises injection the polymer with the carbon additive.

## Patentansprüche

1. Ein Vereisungsschutzsystem (16), umfassend:
eine erste Schicht (18), die Glasfaser, eine dielektrische Schicht oder ein vorimprägniertes Material umfasst;
ein elektrothermisches Vereisungsschutzheizelement (22), das eine thermoplastische Folie (12) umfasst, die einen Kohlenstoffallotropzusatz (14) enthält;
eine zweite Schicht (18), die Glasfaser, eine dielektrische Schicht oder ein vorimprägniertes Material umfasst; und
eine Hautschicht (24), die ein metallisches Material oder Fiberglas umfasst, wobei das Vereisungsschutzsystem optional eine Klebeschicht (20) umfasst, die zwischen einer oder mehreren der ersten Schicht (18) und dem elektrothermischen Vereisungsschutzheizelement (22), dem elektrothermischen Vereisungsschutzheizelement (22) und der zweiten Schicht (18) und der zweiten Schicht (18) und der Hautschicht (24) angeordnet ist;
wobei die erste Schicht, die zweite Schicht und die Hautschicht dem elektrothermischen Vereisungsschutzheizelement Halt geben;
wobei das elektrothermische Vereisungsschutzheizelement zwischen der ersten Schicht und der zweiten Schicht angeordnet ist;
wobei das Vereisungsschutzsystem (16) eine Scherfestigkeit von mindestens 10.342 Kilopascal (1500 Pfund pro Quadratzoll) aufweist; und
wobei das elektrothermische Vereisungsschutzheizelement (22) eine gleichmäßige Dicke zwischen 10 Mikrometern (0,0005 Zoll) und 0,25 mm (0,010 Zoll) aufweist.

2. Das System nach Anspruch 1, wobei die thermoplastische Folie (12) aus einem Material besteht, das aus der Gruppe ausgewählt ist, die aus Polyetheretherketonen, Polyetherimiden,
Polyethylenen, Polyethersulfonen, Polymilchsäure, Nylon, Polyethylennaphthalaten, Polybenzimidazol, Polyimiden, Polymethylmethacrylaten und Kombinationen davon besteht.

3. Das System nach Anspruch 1 oder 2, wobei der Kohlenstoffallotropzusatz (14) aus der Gruppe ausgewählt ist, die aus Kohlenstoffnanoröhren, Graphen, Kohlenstoffnanofasern, Graphitpulver und Graphennanobändern besteht.

4. Das System nach Anspruch 1, 2 oder 3, wobei der Artikel eine gleichmäßige Dicke zwischen 0,02 mm (0,001 Zoll) und 0,06 mm (0,003 Zoll) aufweist.

5. Das System nach Anspruch 1, 2 oder 3, wobei das elektrothermische Vereisungsschutzheizelement (22) eine variierende Dicke aufweist.

6. Das System nach einem der vorhergehenden Ansprüche, wobei das elektrothermische Vereisungsschutzheizelement (22) einen elektrischen Flächenwiderstand zwischen 0,005 Ohm pro Quadrat und 10,0 Ohm pro Quadrat aufweist, und vorzugsweise
wobei das elektrothermische Eisschutzheizelement (22) einen elektrischen Flächenwiderstand zwischen 0,02 Ohm pro Quadrat und 3,0 Ohm pro Quadrat aufweist.

7. Das System nach einem der vorhergehenden Ansprüche, wobei das elektrothermische Vereisungsschutzheizelement (22) in einem ersten Abschnitt des elektrothermischen Vereisungsschutzheizelements (22) einen ersten spezifischen elektrischen Widerstand und in einem zweiten Abschnitt des elektrothermischen Vereisungsschutzheizelements (22) einen zweiten spezifischen elektrischen Widerstand aufweist; und wobei der erste spezifische Widerstand und der zweite spezifische Widerstand unterschiedlich sind.

8. Ein Verfahren (30) zur Herstellung eines elektrothermischen Vereisungsschutzsystems (16), umfassend:
Herstellen eines elektrothermischen Vereisungsschutzheizelements (22) durch:
Erzeugen (32) einer Mischung aus Polymer und Kohlenstoffadditiv; Formen (34) einer thermoplastischen Folie aus der Mischung aus Polymer und Kohlenstoffadditiv; und
Nachbehandeln (36) der Mischung aus Polymer und Kohlenstoffadditiv; und
wobei das elektrothermische Vereisungsschutzheizelement (22) eine gleichmäßige Dicke zwischen 10 Mikrometern (0,0005 Zoll) und 0,25 mm (0,010 Zoll) aufweist,
Montieren des elektrothermischen Vereisungsschutzheizelements (22) auf einer zweiten Schicht (18), die aus Fiberglas, einer dielektrischen Schicht oder einem vorimprägnierten Material besteht;
Montieren einer ersten Schicht (18), die aus Fiberglas, einer dielektrischen Schicht oder einem vorimprägnierten Material besteht, auf dem elektrothermischen Vereisungsschutzheizelement (22) und
optionales Aufbringen einer Klebeschicht (20) zwischen einer oder mehr der ersten Schicht (18) und dem elektrothermischen Vereisungsschutzheizelement (22), dem elektrothermischen Vereisungsschutzheizelement (22) und der zweiten Schicht sowie der zweiten Schicht (18) und der Hautschicht (24);
wobei die erste Schicht, die zweite Schicht und die Hautschicht dem elektrothermischen Vereisungsschutzheizelement Halt geben;
wobei das elektrothermische Vereisungsschutzheizelement zwischen der ersten Schicht und der zweiten Schicht angeordnet ist; und
wobei das Vereisungsschutzsystem (16) eine Scherfestigkeit von mindestens 10.342 Kilopascal (1500 Pfund pro Quadratzoll) aufweist.

9. Verfahren nach Anspruch 8, wobei die Herstellung einer Mischung aus Polymer und Kohlenstoffadditiv das Auflösen eines Basispolymerharzes und das Einmischen des Kohlenstoffadditivs in das Basispolymerharz umfasst.

10. Das Verfahren nach Anspruch 8, wobei die Herstellung (32) einer Mischung aus Polymer und Kohlenstoffadditiv das Mischen eines Polymerharzes und des Kohlenstoffadditivs in einem Kunststoffverbindungsprozess umfasst, und vorzugsweise
wobei der Kunststoffverbindungsprozess das Erhitzen des Polymerharzes umfasst, um die Einarbeitung des Kohlenstoffadditivs zu ermöglichen und einen Film zu erzeugen, und vorzugsweise
wobei das Formen (34) einer thermoplastischen Folie aus der Mischung aus Polymer und Kohlenstoffadditiv dadurch erfolgt, dass die Folie in eine Form gegeben wird, um eine Folie zu bilden.

11. Das System nach Anspruch 8, 9 oder 10, wobei die thermoplastische Folie (12) aus einem Material besteht, das aus der Gruppe ausgewählt ist, die aus Polyetheretherketonen, Polyetherimiden, Polyethylenen, Polyethersulfonen, Polymilchsäure, Nylon, Polyethylennaphthalaten, Polybenzimidazol, Polyimiden, Polymethylmethacrylaten und Kombinationen davon besteht, und/oder
wobei der Kohlenstoffallotropzusatz (14) aus der Gruppe ausgewählt ist, die aus Kohlenstoffnanoröhren, Graphen, Kohlenstoffnanofasern, Graphitpulver und Graphennanobändern besteht.

12. Verfahren nach einem der Ansprüche 8 bis 11, wobei das Bilden (34) einer Folie (12) das Formen der Mischung in eine komplexe Form umfasst.

13. Verfahren nach einem der Ansprüche 8 bis 12, wobei das Bilden einer Mischung das Einspritzen des Polymers mit dem Kohlenstoffadditiv umfasst.

## Revendications

1. Un système de protection contre le givre (16) comprend :
une première couche (18) comprenant de la fibre de verre, un film diélectrique ou un matériau pré-imprégné ;
un élément chauffant électrothermique de protection contre la glace (22) comprenant une feuille thermoplastique (12) contenant un additif allotrope de carbone (14) ;
une second couche (18) comprenant de la fibre de verre, un film diélectrique ou un matériau pré-imprégné ; et
une couche de peau (24) comprenant un matériau métallique ou de la fibre de verre, dans lequel le système de protection contre le givre comprend éventuellement une couche adhésive (20) positionnée entre l'une ou plusieurs de la première couche (18) et l'élément chauffant de protection contre le givre électrothermique (22), l'élément chauffant de protection contre le givre électrothermique (22) et la seconde couche (18) et la seconde couche (18) et la couche de revêtement (24) ;
dans lequel la première couche, la second couche et la couche de revêtement fournissent un support à l'élément chauffant électrothermique de protection contre la glace ;
dans lequel l'élément chauffant électrothermique de protection contre la glace est disposé entre la première couche et la seconde couche ;
dans lequel le système de protection contre la glace (16) présente une résistance au cisaillement d'au moins 10 342 kilopascals (1 500 livres par pouce carré) ; et
dans lequel l'élément chauffant électrothermique de protection contre la glace (22) présente une épaisseur uniforme comprise entre 10 micromètres (0,0005 pouces) et 0,25 mm (0,010 pouces).

2. Système selon la revendication 1, dans lequel la feuille thermoplastique (12) est constituée d'un matériau choisi dans le groupe constitué des polyétheréthercétones, les polyétherimides, les polyéthylènes, les polyéthersulfones, l'acide polylactique, le nylon, les polyéthylène-naphtalates, le polybenzimidazole, les polyimides, les polyméthacrylates de méthyle et leurs combinaisons.

3. Système selon la revendication 1 ou 2, dans lequel l'additif allotrope de carbone (14) est choisi dans le groupe constitué des nanotubes de carbone, le graphène, les nanofibres de carbone, la poudre de graphite et les nanorubans de graphène.

4. Système selon la revendication 1, 2 ou 3, dans lequel l'article présente une épaisseur uniforme comprise entre 0, 02 mm (0,001 pouces) et 0,06 mm (0,003 pouces).

5. Système selon la revendication 1, 2 ou 3, dans lequel l'élément chauffant électrothermique de protection contre la glace (22) présente une épaisseur variable.

6. Système selon l'une quelconque des revendications précédentes, dans lequel l'élément chauffant électrothermique de protection contre la glace (22) présente une résistivité électrique de feuille comprise entre 0,005 ohm par carré et 10,0 ohms par carré, et de préférence
dans lequel l'élément chauffant électrothermique de protection contre la glace (22) a une résistivité de feuille électrique comprise entre 0,02 ohms par carré et 3,0 ohms par carré.

7. Système selon l'une quelconque des revendications précédentes, dans lequel l'élément chauffant électrothermique de protection contre la glace (22) présente une première résistivité électrique dans une première partie de l'élément chauffant électrothermique de protection contre la glace (22), et une seconde résistivité électrique dans une seconde partie de l'élément chauffant électrothermique de protection contre la glace (22) ; et dans lequel la première résistivité et la seconde résistivité diffèrent.

8. Procédé (30) de fabrication d'un système de protection électrothermique contre la glace (16) comprenant :
la fabrication d'un élément chauffant électrothermique de protection contre la glace (22) en :
créant (32) un mélange de polymère et d'additifs de carbone ;
formant (34) une feuille thermoplastique à partir du mélange de polymère et d'additif de carbone ; et
post-traitant (36) le mélange de polymère et d'additifs de carbone ; et
dans lequel l'élément chauffant électrothermique de protection contre la glace (22) présente une épaisseur uniforme comprise entre 10 micromètres (0,0005 pouces) et 0,25 mm (0,010 pouces), montant l'élément chauffant électrothermique de protection contre la glace (22) sur une seconde couche (18) comprenant de la fibre de verre, un film diélectrique ou un matériau pré-imprégné ;
montant une première couche (18) comprenant de la fibre de verre, un film diélectrique ou un matériau pré-imprégné sur l'élément chauffant électrothermique de protection contre la glace (22), et
appliquant éventuellement une couche adhésive (20) entre une ou plusieurs de la première couche (18) et l'élément chauffant électrothermique de protection contre la glace (22), l'élément chauffant de protection électrothermique contre la glace (22) et la seconde couche, et la seconde couche (18) et la couche de revêtement (24) ;
dans lequel la première couche, la second couche et la couche de revêtement fournissent un support à l'élément chauffant électrothermique de protection contre la glace ;
dans lequel l'élément chauffant électrothermique de protection contre la glace est disposé entre la première couche et la seconde couche ; et
dans lequel le système de protection contre la glace (16) présente une résistance au cisaillement d'au moins 10 342 kilopascals (1 500 livres par pouce carré) .

9. Procédé selon la revendication 8, dans lequel la création d'un mélange de polymère et d'additif de carbone comprend la dissolution d'une résine polymère de base et le mélange de l'additif de carbone dans la résine polymère de base.

10. Procédé selon la revendication 8, dans lequel la création (32) d'un mélange de polymère et d'additif de carbone comprend le mélange d'une résine polymère et de l'additif de carbone dans un processus de compoundage de plastique, et de préférence
dans lequel le procédé de compoundage plastique comprend le chauffage de la résine polymère pour permettre l'incorporation de l'additif de carbone pour créer un film, et de préférence
dans lequel la formation (34) d'une feuille thermoplastique à partir du mélange de polymère et d'additif de carbone est réalisée en plaçant le film dans un moule pour former une feuille.

11. Procédé selon la revendication 8, 9 ou 10, dans lequel la feuille thermoplastique (12) est constituée d'un matériau choisi dans le groupe constitué des polyétheréthercétones, les polyétherimides, les polyéthylènes, les polyéthersulfones, l'acide polylactique, le nylon, les polyéthylène-naphtalates, le polybenzimidazole, les polyimides, les polyméthacrylates de méthyle et leurs combinaisons, et/ou
dans lequel l'additif allotrope de carbone (14) est choisi dans le groupe constitué des nanotubes de carbone, le graphène, les nanofibres de carbone, la poudre de graphite et les nanorubans de graphène.

12. Procédé selon l'une quelconque des revendications 8 à 11, dans lequel la formation (34) d'une feuille (12) comprend le moulage du mélange en une forme complexe.

13. Procédé selon l'une quelconque des revendications 8 à 12, dans lequel la formation d'un mélange comprend l'injection du polymère avec l'additif de carbone.
